# EUROPEAN PATENT APPLICATION

(11) **EP 2 099 169 A1**
(43) Date of publication of application: **09.09.2009**
(21) Application number: 07801069.1
(22) Date of filing: 10.09.2007
(51) Int. Cl.: H04L 12/56

(54) **A METHOD, EQUIPMENT AND SYSTEM FOR TRANSMITTING DATA**

(30) Priority: 30.12.2006 CN 200610064658
(71) Applicant: Huawei Technologies Co., Ltd., Longgang District, Shenzhen Guangdong 518129 (CN)
(72) Inventor: LIU, Guoman, Guangdong 518129 (CN)
(74) Representative: Thun, Clemens
(86) International application number: PCT/CN2007/070661
(87) International publication number: WO 2008/080315

(57) **Abstract**

A method for transferring data includes: at the transmit end of data frames, assembling the data frames with a same forward-path into a multiframe as sub-frames and identifying the relevant information of the sub-frames in the header of the multiframe; and encapsulating the multiframe as the payload in the format of frames for transmission in the transport network. An apparatus for transferring data includes: a decapsulation unit, adapted to decapsulate the frames received from the transport network to obtain the multiframe; a multiframe resolving unit, adapted to resolve multiple sub-frames according to the relevant information of the sub-frames that is identified in the header of the multiframe; and a forwarding unit, adapted to send the sub-frames to a customer network according to the forward-paths of the sub-frames. The present invention may reduce the workload of the forwarding equipment in processing data frames, speed up the processing and forwarding of data frames, and improve the network transmission efficiency.

## Description

This application claims priority to the Chinese Patent Application No.200610064658.4, filed with the Chinese Patent Office on December 30, 2006 and entitled "Method, Apparatus and System for Transferring Data", the contents of which are incorporated herein by reference in their entirety.

### Field of the Invention

The invention relates to network communication technologies, and in particular to a method, an apparatus and a system for transferring data.

### Background of the Invention

With the increase of line speed and data traffic in communication networks, the equipment in the networks carries heavier load. Though the data traffic is larger on the whole, the size of packet granularity becomes smaller, which further increases the load of the switching equipment. Besides, transferring the data of small granularities by using traditional data transmission methods may increase the overhead during data transmission and reduce the utilization of network bandwidth. It may also increase the number of equipment processing times and the load of the equipment. For example, during the transmission of non-IP traffic frames in the current Internet, the traditional method is to encapsulate each non-IP traffic data frame into an IP packet to form a small IP packet for transmission. When an 80-byte Ethernet data frame is encapsulated in an IPv6 packet for transmission, the actual transmission efficiency is only 46.7% because of too many overhead bytes. Thus, such a transmission method increases the workload of forwarding packets by the intermediate transmission equipment, and costs and power consumption of the equipment.

To reduce the data processing workload of the intermediate equipment in a communication network and improve the utilization of transmission bandwidth, the prior art discloses a scheme for EtherIP tunnel technologies. The main content of the scheme is to encapsulate one or more complete Ethernet frames into an IP packet for transmission in an IP tunnel. It is evident that encapsulating multiple complete Ethernet frames into an IP packet to form a large IP packet for transmission reduces the data processing workload of the intermediate equipment and overhead bytes for the transmission, and improves the transmission efficiency in a network. However, on the tunnel egress edge node, when encapsulated IP packets are being resolved, each sub-frame must be aligned according to the leading character and start frame delimiter of each Ethernet sub-frame to extract Ethernet frames from the IP packets. This greatly affects the data processing speed and efficiency, thus causing traffic delay.

The prior art provides a second technical scheme, the main content of which is as follows: encapsulating each data frame to be transferred into a sub-frame in the length indication format or general framing procedure (GFP); assembling multiple sub-frames with the same forward-path into a multiframe; mapping the multiframe to the network transport layer as the payload; and encapsulating the multiframe at the network transport layer for transmission.

In the preceding second technical scheme, on the ingress edge node in the transmission network, each sub-frame must be encapsulated in the format of GFP or length indication; after decapsulation is performed at the network transport layer on the egress edge node, frame alignment and decapsulation must be performed on each sub-frame in the multiframe. This increases the processing complexity and results in forwarding delay. Besides, encapsulation on each sub-frame in the format of length indication or GFP may increase overheads and affect the network transport efficiency and bandwidth utilization.

### Summary of the Invention

Embodiments of the present invention provide a method, an apparatus and a system for transferring data to reduce overheads occupied during data transmission.

A method for transferring data according to an embodiment of the present invention includes:
at the transmit end of data frames, assembling the data frames with a same forward-path into a multiframe as sub-frames and identifying the relevant information of the sub-frames in the header of the multiframe, where the relevant information of the sub-frames includes the number of sub-frames and the location of a sub-frame in the multiframe; and
encapsulating the multiframe as a payload in the format of frames for transmission in the transport network.

Another method for transferring data according to an embodiment of the present invention includes:
when data frames arrive at the ingress edge node of the transport network, assembling the data frames with a same forward-path into a multiframe as sub-frames and identifying the relevant information of the sub-frames in the header of the multiframe;
encapsulating the multiframe as a payload in the format of frames for transmission in the transport network;
when the multiframe including multiple data sub-frames arrives at the egress edge node in the transport network, decapsulating the frames transferred in the transport network to obtain the multiframe;
determining the initial location of each data sub-frame in the multiframe according to the data sub-frame offset in the header ID of the multiframe and extracting multiple data sub-frames; and
forwarding the data sub-frames to a customer network according to the forward-paths of the data sub-frames.

An apparatus for transferring data in an embodiment of the present invention includes:
a multiframe assembly unit, adapted to assemble the data frames with a same forward-path into a multiframe as sub-frames and identify the relevant information of the sub-frames in the header of the multiframe, where the relevant information of the sub-frames includes the number of sub-frames and the location of a sub-frame in the multiframe; and
an encapsulating unit, adapted to encapsulate the multiframe as a payload in the format of frames for transmission in the transport network.

Another apparatus for transferring data according to an embodiment of the present invention includes:
a decapsulating unit, adapted to decapsulate the frames received from the transport network to obtain a multiframe;
a multiframe resolving unit, adapted to resolve multiple sub-frames according to the relevant information of the sub-frames that are identified in the header of the multiframe, where the relevant information of sub-frames includes the number of sub-frames and the location of a sub-frame in the multiframe; and
a forwarding unit, adapted to send the sub-frames to a customer network according to the forward-paths of the sub-frames.

A system for transferring data according to an embodiment of the present invention includes an ingress edge node apparatus and an egress edge node apparatus.

The ingress edge node apparatus includes:
a multiframe assembly unit, adapted to assemble the data frames with a same forward-path into a multiframe as sub-frames and identify the relevant information of the sub-frames in the header of the multiframe, where the relevant information of the sub-frames includes the number of sub-frames and the location of a sub-frame in the multiframe; and
an encapsulating unit, adapted to encapsulate the multiframe as a payload in the format of frames for transmission in the transport network.

The egress edge node apparatus includes:
a decapsulating unit, adapted to decapsulate the frames received from the transport network to obtain a multiframe;
a multiframe resolving unit, adapted to resolve multiple sub-frames from the relevant information of the sub-frames that is identified in the header of the multiframe; and
a forwarding unit, adapted to send the sub-frames to a customer network according to the forward-paths of the sub-frames.

In the technical scheme of the present invention, such information as offsets of sub-frames is identified in the header of a multiframe, the sub-frames are filled in the payload area of the multiframe as payloads, and the multiframe is encapsulated at the transport network layer for transmission. This enables the intermediate node in the transport network to transfer the multiframe without any processing of the multiframe. In addition, on the egress edge node in the transport network, the sub-frames are quickly aligned and resolved according to the offsets of the sub-frames that are identified in the header of the multiframe. This reduces the workload of the forwarding equipment in processing data frames, speeds up the processing and forwarding of data frames, decreases overheads, and improves the network transmission efficiency.

### Brief Description of the Drawings

Figure 1 shows the network architecture applicable to a method for transferring data according to an embodiment of the present invention;

Figure 2 shows the frame format of an IPv6 multiframe that is obtained by using a method for processing data according to an embodiment of the present invention;

Figure 3 shows the frame format of an GFP multiframe that is obtained by using a method for processing data according to an embodiment of the present invention; and

Figure 4 shows the structure of an apparatus for transferring data according to an embodiment of the present invention.

### Detailed Description of the Invention

For better understanding of the technical scheme and merits of the present invention, the present invention is hereinafter described in detail with reference to embodiments and accompanying drawings.

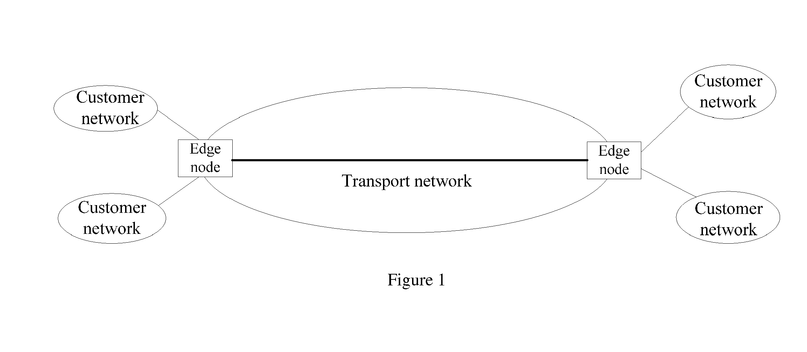

Figure 1 shows the network architecture applicable to a method for according to an embodiment of the present invention. As shown in Figure 1, multiple customer networks are connected to a transport network through an edge node of the transport network. The transport network may be an Ethernet or a multi-protocol label switching (MPLS) network. To send data frames to another customer network, a customer network may be connected to the transport network for transmission. It is understandable that Figure 1 shows the network architecture according to an exemplary embodiment of the present invention and is not intended to limit the network patterns of the present invention.

When multiple data frames sent from a customer network arrive at the ingress edge node of the transport network, multiple data frames with a same forward-path are encapsulated into the payload area of a multiframe, and the relevant information of sub-frames is identified in the multiframe; when the multiframe arrives at the egress edge node of the transport network, each sub-frame is aligned and forwarded according to the relevant information of sub-frames that is carried in the multiframe.

### Embodiment 1

The method for transferring data according to an embodiment of the present invention includes the following steps:

S101: When a sub-frame accesses the network through the ingress edge node, classifying the sub-frame according to the forward-path of the sub-frame.

The sub-frame includes Ethernet frames, MPLS frames, or any combination thereof. Thus, the forward-path may be searched according to the destination MAC address and/or VLAN label in an Ethernet packet and label in an MPLS packet. This method is also applicable to sub-frames of other data packets. Accordingly, the forward-patch may be searched according to the feature information of other data packets, such as pseudo wire (PW) label.

S102: Filling the sub-frames with a same forward-path in the payload area of an IPv6 frame and identifying the relevant information of the sub-frames in the extended packet header of the multiframe to form a multiframe.

The encapsulation process in Step 102 includes: filling multiple sub-frames with a same forward-path in the payload area of an IPv6 packet and using the extended packet header of the Pv6 packet to identify the relevant information of the sub-frames that is filled in the payload area, for example, offset of each sub-frame in the IPv6 packet and the number and type of sub-frames.

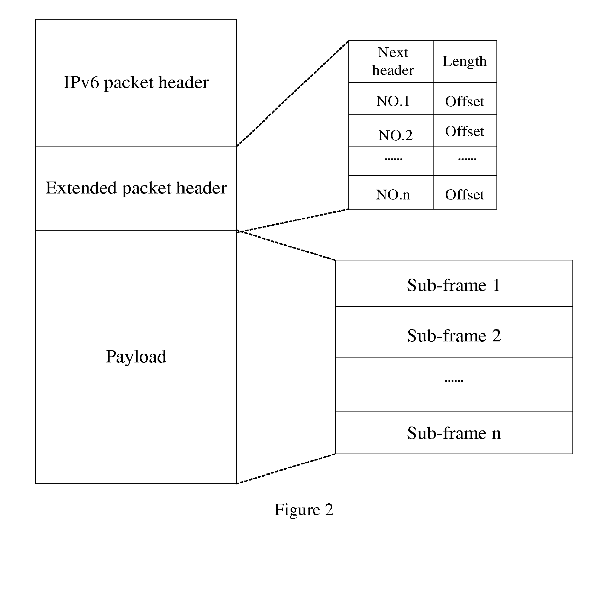

Figure 2 shows the frame format of an encapsulated IPv6 packet, where the extended packet header is located behind the IPv6 packet header and adapted to identify the relevant information of the sub-frames that is filled in the payload area. For an IPv6 packet, the extended packet header is optional. The type of extended packet headers in the IPv6 packet has been defined in relevant standards, and will not be described further. In the preceding embodiment, the extended packet header refers to an extended packet header for the destination option and is used to indicate options that are processed by the destination. That is, the egress edge node of the transport network can quickly delimit and decapsulate the sub-frames that are encapsulated in an IPv6 multiframe according to the offset of each sub-frame in the IPv6 multiframe indicated in the extended packet header. In this embodiment, when the same type of sub-frames is filled in the payload area, the following parameters may be defined for the extended packet header:
1. Next header, adapted to indicate the type of a sub-frame encapsulated in an IPv6 packet. For example, the next header may indicate that the sub-frame encapsulated in an IPv6 is a multiframe that is composed of multiple Ethernet frames;
2. Length, adapted to indicate the length of an extended packet header in an IPv6 packet;
3. No.1-No.n, adapted to indicate the sequence number of each sub-frame; and
4. Offset, adapted to indicate the offset of each sub-frame, that is, the initial location of each sub-frame in an IPv6 frame.

When different types of sub-frames are filled in the payload area, a type parameter may be added, which is adapted to indicate the type of each sub-frame.

The size of the multiframe is determined according to the delay constraints, rated bandwidth output by the multiframe, and the number of bytes of the maximum packet length at the network transport layer. The minimum length of the multiframe is generally planned in the whole network and is not calculated for each service.

S103: Encapsulating the IPv6 multiframe and transferring it in the transport network.

In this embodiment, the network transport layer includes an Ethernet and an MPLS network. Besides, to identify a multiframe in the network, a multiframe ID field may be added to the multiframe. When the multiframe is mapped to the network transport layer as the payload, the multiframe ID field indicates that the packet of the network transport layer carries a multiframe. If it is agreed that all packets are multiframes in the whole network, it is unnecessary to add the multiframe ID field.

During the transfer, the intermediate node on the transfer-path does not process the extended packet header of the IPv6 packet, but transmits it transparently according to the forwarding information of the network transport layer. In addition to forwarding multiframes at the network transport layer, the intermediate node may limit the traffic and schedule priorities by using the information of the network layer.

S104: After receiving the multiframe, the egress edge node decapsulates the multiframe to extract the original sub-frames.

The specific process includes: decapsulating the multiframe at the network transport layer, identifying the multiframe, extracting sub-frames from the multiframe, and sending the sub-frames to a destination customer network.

During the process of extracting sub-frames from the multiframe, the sub-frames may be quickly aligned according to the offset of each sub-frame in the extended header of the IPv6 multiframe. When there are different types of sub-frames, a type parameter may be used to determine the type of each sub-frame.

### Embodiment 2

In the method for transferring data in embodiment 2, the steps that are the same as those in embodiment 1 will not be described further, and the steps different from those in embodiment 1 are described hereafter.

Compared with embodiment 1, embodiment 2 has the following different steps:

Filling the sub-frames with a same forward-path in the payload area of a GFP frame to form a GFP multiframe, and mapping the GFP multiframe to the network transport layer as the payload for transmission.

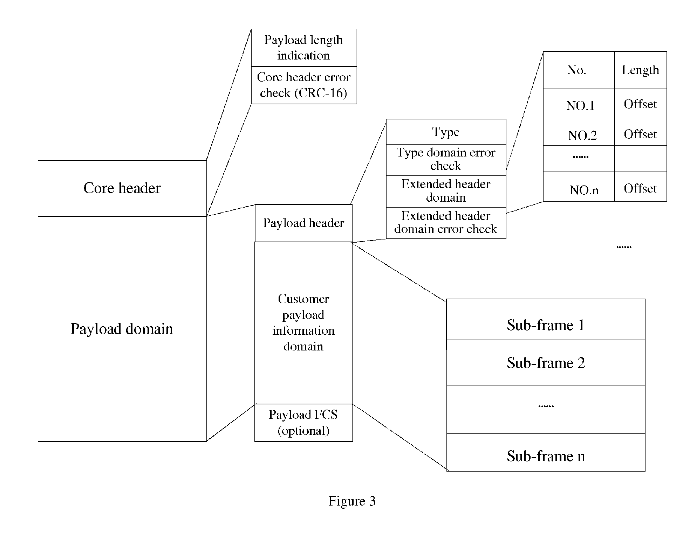

Figure 3 shows the frame format of a GFP multiframe encapsulating sub-frames according to the second embodiment of the present invention. As shown in Figure 3, the GFP multiframe includes a GFP core header and a GFP payload area. The GFP core header is four bytes long and includes a 16-bit payload length indication domain and a 16-bit core header error detection domain. The GFP payload area includes a payload header, a payload information domain and an optional domain payload FCS. The GFP payload header has two mandatory areas, namely, a type domain and a domain. It also has an optional extended header domain with variable length. The type domain indicates whether the extended header and structure thereof are available and whether the optional payload FCS domain is available. In the second embodiment, the extended header domain indicates the relevant information of each sub-frame in the GFP frame payload area, such as offset of each sub-frame in the IPv6 packet and the number and type of sub-frames. In the second embodiment, when the same type of sub-frames is filled in the payload area, the following parameters may be defined for the extended packet header:
1. Count, adapted to indicate the number of sub-frames encapsulated in the GFP frame;
2. Length, adapted to indicate the length of the extended packet header of the GFP frame;
3. No.1-No.n, adapted to indicate the sequence number of each sub-frame; and
4. Offset, adapted to indicate the offset of each sub-frame, that is, the initial location of each sub-frame in the GFP frame.

When different types of sub-frames are filled in the payload area, a type parameter may be added, which is adapted to indicate the type of each sub-frame.

Accordingly, after receiving the multiframe and decapsulating the data frames at the network transport layer, the egress edge node performs fast frame alignment and restores multiple sub-frames according to the information in the extended header domain of the GFP multiframe payload header.

An embodiment of the present invention discloses an apparatus for transferring data based on an idea that is the same as the preceding method. Because the method in the embodiment has the same idea as the apparatus in another embodiment, both embodiments may have a lot of same or similar technical features. Such same or similar technical features will not be described further.

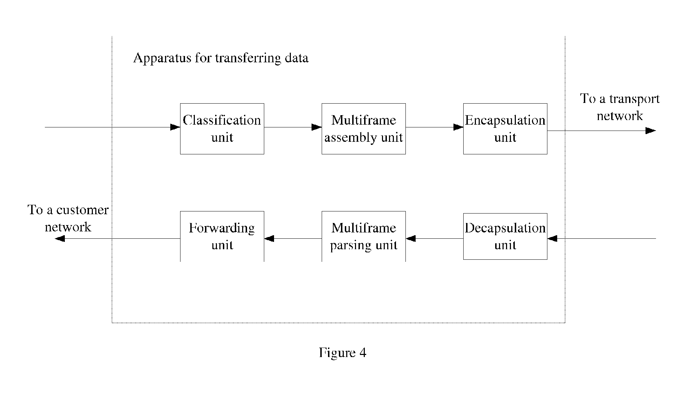

Figure 4 shows the structure of an apparatus for transferring data according to an embodiment of the present invention. As shown in Figure 4, the apparatus includes a classification unit, a multiframe assembly unit, an encapsulation unit, a decapsulation unit, a multiframe resolving unit, and a forwarding unit.

More particularly, the network communication apparatus may be located on an edge node in the transport network. When receiving data frames from a customer network, the classification unit classifies the received data frames and sends them to the multiframe assembly unit according to the forward-path. The multiframe assembly unit fills multiple data frames with a same forward-path in the payload area of the multiframe as sub-frames, identifies the relevant information of the sub-frames in the extended header of the multiframe, and sends it to the encapsulation unit. The encapsulation unit encapsulates the multiframe on the transport network and transmits it.

Accordingly, after receiving the multiframe from the customer network, the decapsulation unit decapsulates the multiframe on the transport network to obtain the multiframe and sends the multiframe to the multiframe resolving unit. The multiframe resolving unit locates the sub-frames according to the relevant information of the sub-frames that is identified in the multiframe header, resolves multiple sub-frames, and sends them to the forwarding unit. The forwarding unit sends the sub-frames to a customer network according to the forward-path of each sub-frame.

The preceding embodiments are exemplary embodiments of the present invention only and not intended to limit the scope of protection of the present invention. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for transferring data, comprising:
assembling, at the transmit end of data frames, the data frames with a same forward-path into a multiframe as sub-frames and identifying the relevant information of the sub-frames in the header of the multiframe, wherein the relevant information of the sub-frames includes the number of sub-frames and the location of a sub-frame in the multiframe; and
encapsulating the multiframe as a payload in the format of frames for transmission in the transport network.

2. The method of claim 1, wherein the multiframe is an IPv6 data frame, and assembling the data frame into a multiframe as sub-frames comprises:
filling the sub-frame in a payload area of the IPv6 data frame and identifying the number and offsets of sub-frames in the extended packet header of the IPv6 data frame.

3. The method of claim 2, wherein when there are different types of sub-frames, the type of each sub-frame is identified in the extended packet header of the IPv6 data frame.

4. The method of claim 1, wherein the multiframe is a GFP data frame, and assembling the data frame into a multiframe as sub-frames comprises:
filling multiple sub-frames in the payload area of the GFP data frame and identifying the number and offsets of sub-frames in the extended header domain of the GFP data frame.

5. The method of claim 4, wherein when there are different types of sub-frames, the type of each sub-frame is identified in the extended header domain of the GFP data frame.

6. The method of claim 1, comprising:
searching the forward-path according to the label of MPLS packet, destination medium access control (MAC) address in an Ethernet packet, virtual local area network (VLAN) label, or any combination thereof.

7. The method of claim 1, claim 2 or claim 4, further comprising:
before encapsulating the multiframe as the payload, adding a multiframe ID field to the multiframe to identify the multiframe in the frames transferred in the transport network.

8. The method of claim 1, further comprising:
at the receive end of data frames, decapsulating the frames transferred in the transport network to obtain the multiframe;
extracting the sub-frames according to the relevant information of sub-frames that is identified in the header of the multiframe; and
forwarding the sub-frames to a customer network according to the forward-paths of the data sub-frames.

9. The method of claim 1, wherein the transport network comprises an Ethernet or an MPLS network.

10. A method for transferring data, comprising:
when data frames arrive at the ingress edge node of the transport network, assembling the data frames with a same forward-path into a multiframe as sub-frames and identifying the relevant information of the sub-frames in the header of the multiframe;
encapsulating the multiframe as a payload in the format of frames for transmission in the transport network;
when the multiframe including multiple data sub-frames arrives at the egress edge node in the transport network, decapsulating the frames transferred in the transport network to obtain the multiframe;
determining the initial location of each data sub-frame in the multiframe according to the data sub-frame offset in the header ID of the multiframe and extracting multiple data sub-frames; and
forwarding the data sub-frames to a customer network according to the forward-paths of the data sub-frames.

11. An apparatus for transferring data, comprising:
a multiframe assembly unit, adapted to assemble the data frames with a same forward-path into a multiframe as sub-frames and identify the relevant information of the sub-frames in the header of the multiframe, wherein the relevant information of the sub-frames includes the number of sub-frames and the location of a sub-frame in the multiframe; and
an encapsulating unit, adapted to encapsulate the multiframe as a payload in the format of frames for transmission in the transport network.

12. An apparatus for transferring data, comprising:
a decapsulating unit, adapted to decapsulate the frames received from the transport network to obtain a multiframe;
a multiframe resolving unit, adapted to resolve multiple sub-frames according to the relevant information of the sub-frames that are identified in the header of the multiframe, wherein the relevant information of sub-frames includes the number of sub-frames and the location of a sub-frame in the multiframe; and
a forwarding unit, adapted to send the sub-frames to a customer network according to the forward-paths of the sub-frames.

13. A system for transferring data comprises an ingress edge node apparatus and an egress edge node apparatus, wherein:
the ingress edge node apparatus comprises:
a multiframe assembly unit, adapted to assemble the data frames with a same forward-path into a multiframe as sub-frames and identify the relevant information of the sub-frames in the header of the multiframe, wherein the relevant information of the sub-frames includes the number of sub-frames and the location of a sub-frame in the multiframe; and
an encapsulating unit, adapted to encapsulate the multiframe as a payload in the format of frames for transmission in the transport network.
the egress edge node apparatus comprises:
a decapsulating unit, adapted to decapsulate the frames received from the transport network to obtain a multiframe;
a multiframe resolving unit, adapted to resolve multiple sub-frames from the relevant information of the sub-frames that is identified in the header of the multiframe; and
a forwarding unit, adapted to send the sub-frames to a customer network according to the forward-paths of the sub-frames.
